# EUROPÄISCHE PATENTANMELDUNG

(11) **EP 0 849 753 A2**
(43) Veröffentlichungstag der Anmeldung: **24.06.1998**
(21) Anmeldenummer: 97120312.0
(22) Anmeldetag: 20.11.1997
(51) Int. Cl.: H01H 47/32

(54) **Getaktete Endstufenschaltung zur Steuerung oder Regelung induktiver Lasten**

(30) Priorität: 18.12.1996 DE 19652622
(71) Anmelder: GKR Gesellschaft für Fahrzeugklimaregelung mbH, D-71701 Schwieberdingen (DE)
(72) Erfinder: Breitling, Wolfram, 74343 Sachsenheim (DE); Weible, Reinhold, 70437 Stuttgart (DE); Eisenhardt, Harald, 71277 Rutesheim (DE); Falliano, Rolf, 73635 Rudersberg (DE)
(74) Vertreter: Behrens, Ralf-Holger

(57) **Zusammenfassung**

Die Erfindung bezieht sich auf eine getaktete Endstufenschaltung zur Steuerung oder Regelung induktiver Lasten. Ein Schutz gegen Kurzschluß, Überlast und/oder Temperatur wird zuverlässig dadurch erreicht, daß ein Schutzschaltungsabschnitt mit einer Leistungsbegrenzungsschaltung vorgesehen ist, die die für die induktive Last gemäß einer Endstufenkennlinie bereitgestellte Leistung auf einen Wert einer Leistungsbegrenzungskennlinie zwischen einem Überlastbereich und einem Arbeitsbereich begrenzt.

## Beschreibung

### Stand der Technik

Die Erfindung bezieht sich auf eine getaktete Endstufenschaltung zur Steuerung oder Regelung induktiver Lasten.

Derartige getaktete Endstufenschaltungen sind zum Beispiel zur Ansteuerung von Elektromotoren, die induktive Lasten darstellen, bekannt. Ein Nachteil einer solchen getakteten Endstufenschaltung ist ein mangelnder Schutz bei Kurzschluß, Überlast oder zu hohen Temperaturen, wodurch nicht nur der Motor, sondern auch die Endstufenschaltung oder andere Beschaltungen beschädigt werden können.

Bei anderen Endstufenschaltungen ist es bekannt, die Endstufe gegen Kurzschluß eines Verbrauchers zu schützen, indem das Steuersignal in Abhängigkeit vom Spannungsabfall an einer Schaltstrecke eines Endstufentransistors beispielsweise zeitweilig begrenzt wird, wie zum Beispiel in der DE 43 16 185 A1 angegeben. Auch gibt es eine zählergesteuerte Überstromabschaltung, bei der eine Stromgrenze festgelegt wird und die Endstufe nach Überschreiten einer voreingestellten Schwelle über eine bestimmte Anzahl von Impulsen oder innerhalb eines festen oder variablen Zeitfensters abgeschaltet wird. Derartige Schutzmaßnahmen sind aber nicht optimal auf die Anforderungen abgestimmt, die sich bei der Ansteuerung von induktiven Lasten stellen.

### Vorteile der Erfindung

Der Erfindung liegt die Aufgabe zugrunde, eine getaktete Endstufenschaltung der eingangs erwähnten Art bereitzustellen, die einen optimalen Schutz unter Berücksichtigung einer optimalen An-steuerung induktiver Lasten bietet.

Diese Aufgabe wird mit den Merkmalen des Anspruchs 1 gelöst. Demnach ist der Aufbau derart, daß ein Schutzschaltungsabschnitt mit einer Leistungsbegrenzungsschaltung vorgesehen ist, die die für die induktive Last gemäß einer Endstufenkennlinie bereitgestellte Leistung auf einen Wert einer Leistungsbegrenzungskennlinie zwischen einem Überlastbereich und einem Arbeitsbereich begrenzt. Mit diesen Maßnahmen wird erreicht, daß stets eine optimale Ansteuerung der induktiven Last auch bei Auftreten eines Fehlers wie zum Beispiel eines Kurzschlusses, einer Überlast oder einer übermäßigen Temperatur aufrechterhalten wird, ohne daß andererseits die Endstufenschaltung, die induktive Last oder damit im Zusammenhang stehende Schaltungskomponenten beschädigt werden.

Eine geeignete Maßnahme besteht zum Beispiel darin, daß die Leistungsbegrenzungsschaltung für einen linearen Ansteuerbetrieb ausgelegt ist, wobei die Ansteuerung aus dem normalen getakteten Betrieb in den linearen Ansteuerbetrieb übergeht, wenn die Endstufenkennlinie aus dem Arbeitsbereich kommend die Leistungsbegrenzungskennlinie schneidet. Durch den Übergang in einen Linearbetrieb bei Erreichen der Leistungsbegrenzungskennlinie wird die Verlustleistung auf den vorgegebenen Wert der Leistungsbegrenzungskennlinie beschränkt, so daß die induktive Last bzw. der Motor immer im sicheren Arbeitsbereich betrieben wird. Die Bauteile des Leistungsteils der Endstufenschaltung werden durch diese Ansteuerungsweise verhältnismäßig wenig beansprucht. Dabei ist die Auslegung der Leistungsbegrenzungsschaltung mit relativ geringem Aufwand verbunden, da ein Linearbetrieb zur Motorsteuerung an sich bekannt ist und entsprechende Bauteile Verwendung finden können.

Ein geeigneter Aufbau der Endstufenschaltung mit den Schutzmaßnahmen kann zum Beispiel derart sein, daß zum Bereitstellen der Leistung für die induktive Last mindestens ein am Ausgang der Endstufenschaltung angeordneter Leistungstransistor vorgesehen ist, der an seinem Steuereingang im Normalbetrieb von Schaltimpulsen eines Pulsweitengenerators angesteuert ist, während er bei vorhandener Überlast in den linearen Ansteuerbetrieb gesteuert ist. Dadurch ist die Umsteuerung vom normalen getakteten Betrieb in den linearen Ansteuerbetrieb auf einfache Weise erzielbar. Dabei besteht eine günstige Anordnung darin, daß zum Durchführen des linearen Ansteuerbetriebs eine Linear-Leistungsbegrenzungsschaltung zwischen der Ausgangsseite des Leistungstransistors und dessen Steuereingang angeschlossen ist.

Die Schutzmaßnahmen sind vorteilhaft derart ausgeführt, daß die Linear-Leistungsbegrenzungsschaltung eine Verstärkerschaltung mit einem invertierenden und einem nichtinvertierenden Eingang aufweist, von denen der eine auf eine Bezugsspannung und der andere auf eine von der induktiven Last abhängige Spannung und/oder Strom gelegt ist, und daß der Ausgang der Verstärkerschaltung zur Steuerung des linearen Ansteuerbetriebs an einem Knotenpunkt zwischen dem Ausgang des Pulsweitengenerators und dem Steuereingang des Leistungstransistors angeschlossen ist. Hierdurch wird zum Beispiel ein Kurzschluß- oder Überlastfall unmittelbar erfaßt und auch eine übermäßige Temperatur kann zum Beispiel durch eine geeignete Anordnung eines oder mehrerer Bauelemente der Leistungsbegrenzungsschaltung erfaßt werden.

Ein weiterer vorteilhafter Aufbau besteht darin, daß die Leistungsbegrenzungsschaltung für einen getakteten Ansteuerbetrieb ausgelegt ist, wobei die Ansteuerung aus dem normalen getakteten Betrieb in den durch Überlast bedingten getakteten Ansteuerbetrieb übergeht, wenn die Endstufenkennlinie aus dem Arbeitsbereich kommend die Leistungsbegrenzungskennlinie schneidet. Auch durch den getakteten Ansteuerbetrieb wird die induktive Last bzw. der Motor immer im sicheren Arbeitsbereich betrieben. Als zusätzlicher Vorteil ergibt sich, daß eine besonders geringe Verlustleistung erreicht wird.

Mit der Maßnahme, daß zum Bereitstellen der Leistung für die induktive Last mindestens ein am Ausgang der Endstufenschaltung angeordneter Leistungstransistor vorgesehen ist, der an seinem Steuereingang im Normalbetrieb von Schaltimpulsen eines Pulsweitengenerators angesteuert ist, während er bei vorhandener Überlast in den getakteten Überlastbetrieb gesteuert ist, ergibt sich ein sicherer Übergang in den getakteten Überlastbetrieb zum Schutz der Endstufenschaltung bzw. der angeschlossenen induktiven Last oder damit zusammenhängender Bauelemente. Dabei besteht eine geeignete Anordnung darin, daß zum Durchführen des getakteten Überlastbetriebs eine getaktete Leistungsbegrenzungsschaltung zwischen der Ausgangsseite des Leistungstransistors und vor dem Eingang des Pulsweitengenerators angeschlossen ist.

Ein vorteilhafter Aufbau besteht hierbei darin, daß die getaktete Leistungsbegrenzungsschaltung eine Verstärkerschaltung mit einem invertierenden und einem nichtinvertierenden Eingang aufweist, von denen der eine auf eine Bezugsspannung und der andere auf eine von der induktiven Last abhängige Spannung und/oder Strom gelegt ist, und daß der Ausgang der Verstärkerschaltung zur Steuerung des getakteten Ansteuerbetriebs an einem Knotenpunkt vor dem Eingang des Pulsweitengenerators angeschlossen ist. Mit diesen Maßnahmen kann durch Änderung des Tastverhältnisses der getaktete Überlastbetrieb auf relativ einfache Weise verwirklicht werden.

Mit den Maßnahmen, daß sowohl eine Leistungsbegrenzungsschaltung für einen linearen Ansteuerbetrieb als auch eine Leistungsbegrenzungsschaltung für einen getakteten Ansteuerbetrieb vorgesehen ist und daß die beiden Leistungsbegrenzungsschaltungen so ausgelegt sind, daß die Leistungsbegrenzungsschaltung für den linearen Ansteuerbetrieb in einem unteren Spannungsbereich der Leistungsbegrenzungskennlinie bis zu einer Grenzspannung wirksam ist und daß die Leistungsbegrenzungsschaltung für den getakteten Ansteuerbetrieb in dem Spannungsbereich oberhalb der Grenzspannung wirksam ist, werden die Vorteile des linearen Ansteuerbetriebs und des getakteten Ansteuerbetriebs vorteilhaft miteinander kombiniert. Bei niedrigen Spannungen an der induktiven Last werden dabei hohe Beanspruchungen der Bauteile der Endstufenschaltung sowie des Motors, einer Freilaufdiode, eines Leistungstransistors und eines Elektrolytpufferkondensators durch die lineare Ansteuerung sicher ausgeschlossen, während oberhalb der Grenzspannung die geringe Verlustleistung bei getaktetem Ansteuerbetrieb vorteilhaft genutzt wird. Hierdurch können die Bauteile der Leistungsbegrenzungsschaltung relativ niedrig dimensioniert werden. Dabei wird die induktive Last stets im sicheren Arbeitsbereich betrieben.

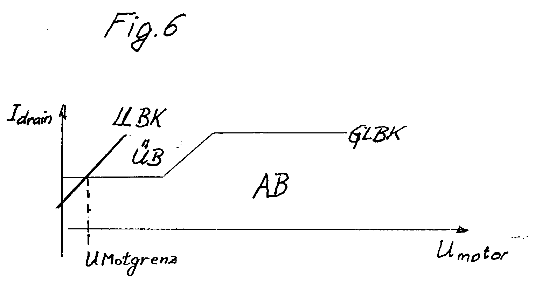

Eine geeignete Leistungsbegrenzungskennlinie zwischen dem Arbeitsbereich und dem Überlastbereich kann zum Beispiel dadurch realisiert werden, daß die mindestens eine Leistungsbegrenzungsschaltung mit ihrem invertierenden Eingang an eine Additionsstufe oder Multiplikationsstufe angeschlossen ist, mit der die von der induktiven Last abhängige Spannung und/oder Strom abgegriffen ist. Auch die Bildung einer Leistungsbegrenzungskennlinie durch stückweises Aneinandersetzen geeigneter Kennlinienteile (z.B. Fig. 6) ist durch entsprechende Ausbildung der Leistungsbegrenzungsschaltung möglich, so daß die Leistungsbegrenzungskennlinie immer optimal an jeweilige Eigenschaften der induktiven Last angepaßt werden kann.

Eine Entkopplung zwischen der normalen Steuerschaltung und der Leistungsbegrenzungsschaltung einerseits und ein Zuschalten der Leistungsbegrenzungsschaltung bei Erreichen der Leistungsbegrenzungskennlinie andererseits wird auf einfache Weise dadurch erreicht, daß der Ausgang der Verstärkerschaltung an die Kathode einer Diode angeschlossen ist, deren Anode an dem Knotenpunkt zwischen dem Ausgang des Pulsweitengenerators und dem Steuereingang des Leistungstransistors bzw. vor dem Eingang des Pulsweitengenerators liegt.

Die Erfindung wird nachfolgend anhand von Ausführungsbeispielen unter Bezugnahme auf die Zeichnungen näher erläutert. Es zeigen:
- Fig. 1: ein Blockschaltbild einer getakteten Endstufenschaltung,
- Fig. 2: ein Ausführungsbeispiel für die in Fig. 1 gezeigte Endstufenschaltung mit einzelnen Schaltungskomponenten,
- Fig. 3: eine Kennliniendarstellung zu einem linearen Ansteuerbetrieb,
- Fig. 4: eine Kennliniendarstellung zu einem getakteten Ansteuerbetrieb und
- Fig. 5: eine Kennliniendarstellung zu einem kombinierten linearen und getakteten Ansteuerbetrieb und
- Fig. 6: eine Kennliniendarstellung zu einem kombinierten linearen und getakteten Ansteuerbetrieb mit verbesserter Schutzcharakteristik.

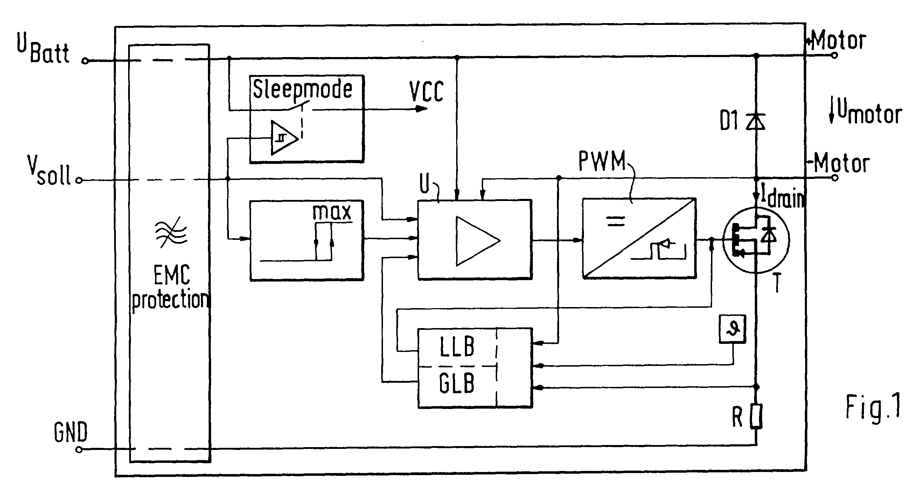

Fig. 1 zeigt eine getaktete Endstufenschaltung im wesentlichen in Blockdarstellung. Eine induktive Last in Form eines Motors wird mit einer Spannung Uₘₒₜₒᵣ am Ausgang der Endstufenschaltung versorgt. Parallel zum Motor liegt eine Freilaufdiode D1. Am Ausgang der Endstufenschaltung liegt ein Leistungstransistor T in Form eines FET-Transistors, über den die Motorspannung Uₘₒₜₒᵣ steuerbar ist, wobei ein Drainstrom I_{drain} fließt. Der Source-Anschluß liegt über einen Widerstand R auf Masse GND zur Ansteuerung des Leistungstransistors T ist an dessen Gate-Anschluß ein Pulsweitengenerator PWM angeschlossen, der unterschiedliche Tastverhältnisse erzeugt und den Leistungstransistor T entsprechend ein- und ausschaltet um unterschiedliche Motorleistungen bereitzustellen. Der Pulsweitengenerator PWM wird seinerseits mittels eines Regelverstärkers U angesteuert, an den der Drain-Anschluß des Leistungstransistors T angeschlossen ist und der an einer Versorgungsspannung VCC bzw. U_{Batt} liegt. An dem Regelverstärker ist eingangsseitig eine Sollspannung angelegt.

Eine Ansteuerung des Pulsweitengenerators durch Sollwertvorgabe ohne Regelung ist möglich.

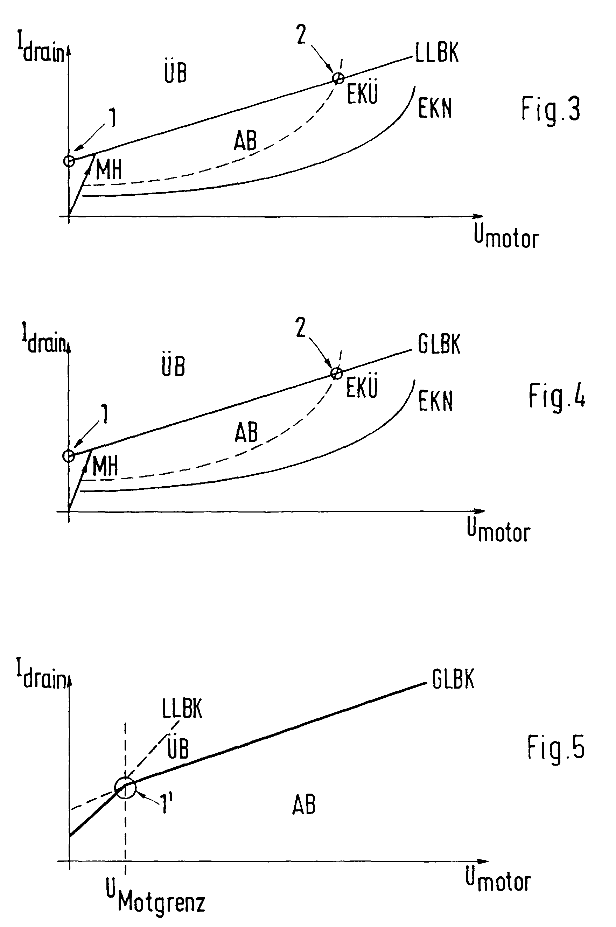

Zur Ansteuerung des Motors über den Leistungstransistors T in einem Überlastfall ist eine Leistungsbegrenzungsschaltung mit einer linearen Leistungsbegrenzungsschaltung LLB und einer getakteten Leistungsbegrenzungsschaltung GLB vorgesehen, an deren Eingang einerseits der Drain-Anschluß und andererseits der Source-Anschluß des Leistungstransistors T und auch ein Temperatursensor 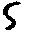 angeschlossen sind. Ausgangsseitig liegt die lineare Leistungsbegrenzungsschaltung LLB am Gate-Anschluß des Leistungstransistors T und die getaktete Leistungsbegrenzungsschaltung GLB am Eingang des Regelverstärkers U. Auf diese Weise empfängt sowohl die lineare Leistungsbegrenzungsschaltung LLB als auch die getaktete Leistungsbegrenzungsschaltung GLB von der induktiven Last abhängige Signale und überwacht diese, um in einem Überlastfall, der zum Beispiel durch einen Kurzschluß, eine Überlast oder eine übermäßige Temperatur bedingt sein kann, so in die Ansteuerung des Motors einzugreifen, daß die Grenze zwischen einem Arbeitsbereich AB (vgl. Fig. 3 bis 5) und einem Überlastbereich ÜB nicht überschritten wird.

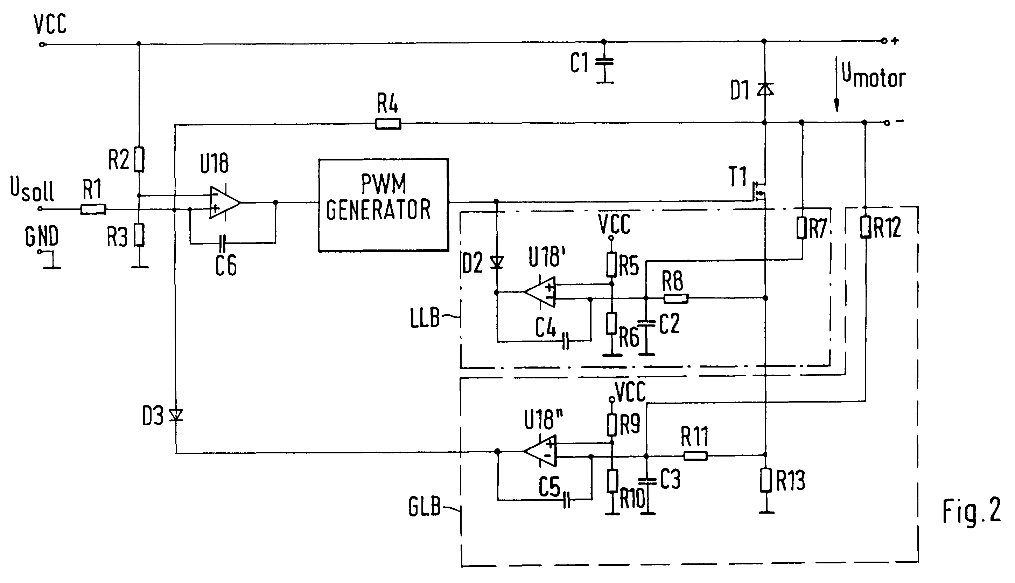

In Fig. 2 sind Ausführungsbeispiele, insbesondere die lineare Leistungsbegrenzungsschaltung LLB und die getaktete Leistungsbegrenzungsschaltung GLB im einzelnen dargestellt. Die lineare Leistungsbegrenzungs-schaltung LLB weist eine Verstärkerschaltung U18' in Form eines Operationsverstärkers mit einem invertierenden Eingang 6 und einem nichtinvertierenden Eingang 5 sowie einem Ausgang 7 auf. An dem nichtinvertierenden Eingang 5 liegt ein Spannungsteiler mit Widerständen R5, R6 zum Bereitstellen einer Bezugsspannung. An dem invertierenden Eingang 6 ist über einen Widerstand R7 der Drain-Anschluß des Leistungstransistors T1 angeschlossen und über einen Widerstand R8 der Source-Anschluß des Leistungstransistors T1. Ferner liegt der invertierende Eingang der Verstärkerschaltung U18' über einen Kondensator C2 auf Masse GND und ist über einen Rückkopplungskondensator C4 mit dem Ausgang 7 der Verstärkerschaltung U18' verbunden. Der Ausgang 7 liegt ferner an der Kathode einer Diode D2, deren Anode mit dem Gate-Anschluß des Leistungstransistors T1 verbunden ist.

Die Widerstände R7 und R8 bilden ein Addierglied, mit dem der Verstärkerschaltung U18 ein von U18' induktiven Last unmittelbar abhängiges Signal zugeführt wird. Mittels der Diode D2 wird die Steuerung des Leistungstransistors T1 in den linearen Betrieb bewirkt, sobald eine lineare Leistungsbegrenzungskennlinie LLBK (vgl. Fig. 3) zwischen dem Arbeitsbereich AB und dem Überlastbereich ÜB von einer Überlast-Endstufenkennlinie EKÜ geschnitten wird. Unterhalb der linearen Leistungsbegrenzungskennlinie LLBK bleibt die Ansteuerung mittels des Pulsweitengenerators PWM wirksam, der entsprechend Fig. 1 an dem Gate-Anschluß des Leistungstransistors T1 liegt.

Zur normalen Leistungsregelung ist am Eingang des Pulsweitengenerators PWM der Regelverstärker U18 mit einem Kondensator C6 zwischen seinem nichtinvertierenden Eingang 5 und seinem Ausgang 7 angeschlossen. Am nichtinvertierenden Eingang 5 der Verstärkerschaltung U18 liegt weiterhin über einen Eingangswiderstand R1 eine Sollspannung Uₛₒₗₗ. Der invertierende Eingang 6 der Verstärkerschaltung U18 ist an einen Spannungsteiler aus Widerständen R2 und R3 angeschlossen, wobei der andere Anschluß des Widerstandes R2 an der Versorgungsspannung VCC und der andere Anschluß des Widerstandes R3 an Masse GND liegt. An den nichtinvertierenden Eingang der Verstärkerschaltung U18 ist außerdem über einen Rückkopplungswiderstand R4 der Drain-Anschluß des Leistungstransistors T1 zur Regelung im Normalbetrieb angeschlossen. An dem nichtinvertierenden Eingang 5 des Regelverstärkers U18 ist ferner über eine weitere Diode D3 ein Ausgang 7 der getakteten Leistungsbegrenzungsschaltung GLB angeschlossen, wobei die Diode mit ihrer Anode an dem nichtinvertierenden Eingang 5 des Regelverstärkers und mit ihrer Kathode an dem Ausgang 7 eines weiteren Verstärkers U18'' angeschlossen ist. Die übrige Beschaltung der getakteten Leistungsbegrenzungsschaltung GLB entspricht in ihrem Aufbau der linearen Leistungsbegrenzungsschaltung LLB, wobei lediglich die Dimensionierung der Bauelemente geeignet im Hinblick auf den Einsatz der getakteten Ansteuerung des Motors im Überlastfall gewählt ist. Demnach ist die Verstärkerschaltung U18'' vorgesehen, an deren nichtinvertierendem Eingang ein Spannungsteiler aus Widerständen R9 und R10 liegt. Der invertierende Eingang weist ein Additionsglied mit den beiden Widerständen R11 und R12 auf und ist über einen Kondensator C3 an Masse GND und über einen Kondensator C5 an den Ausgang 7 der Verstärkerschaltung U18'' angeschlossen. Der Source-Anschluß des Leistungstransistors T1 liegt über einen Widerstand R13 an Masse GND. Die Beschaltung der getakteten Leistungsbegrenzungsschaltung GLB ist derart, daß über die weitere Diode D3 die getaktete Ansteuerung den normalen getakteten Betrieb gemäß der Überlast-Endstufenkennlinie EKÜ bzw. einer Normalbetrieb-Endstufenkennlinie EKN ablöst, wenn ein Überlastfall eintritt.

Als weitere Bauelemente sind gemäß Fig. 2, wie üblich die Freilaufdiode D1, die mit ihrer Anode an dem Drain-Anschluß des Leistungstransistors T1 und mit ihrer Kathode an der Versorgungsspannung VCC liegt, sowie eine Puffer-Kondensator C1 in Form eines Elektrolydkondensators angeschlossen.

Grundsätzlich kann die Leistungsbegrenzung allein mit der linearen Leistungsbegrenzungsschaltung LLB oder allein mit der getakteten Leistungsbegrenzungsschaltung GLB durchgeführt werden. Dabei haben beide Leistungsbegrenzungsschaltungen LLB, GLB die Vorteile, daß der Motor stets im sicheren Arbeitsbereich AB betrieben wird, wie aus den Fig. 3 und 4 ersichtlich ist. Die Auslegung der Bauteile für die lineare Leistungsbegrenzungsschaltung kann entsprechend einem Schaltungsaufbau für einen an sich bekannten Linearbetrieb zur Motorsteuerung gewählt werden und ist somit wenig aufwenidg. Die Beanspruchung der Bauteile ist gegenüber einem getakteten Betrieb insbesondere bei geringer Motorspannung Uₘₒₜₒᵣ gering, und die EMV ist im Linearbetrieb günstig.

Als Nachteile des Linearbetriebs sind die relativ hohe Verlustleistung in der Endstufe bei hohen Motorspannungen Uₘₒₜₒᵣ bzw. hohen Tastverhältnissen (bei normaler getakteter Steuerung) sowie die damit verbundene hohe Dimensionierung der Bauteile zu nennen.

Als Vorteil der getakteten Leistungsbegrenzung ist insbesondere die geringe Verlustleistung anzuführen. Jedoch ergeben sich bei der getakteten Ansteuerung folgende Nachteile; Durch das aufgrund des Motoranlaufs benötigte Mindesttastverhältnis ergeben sich bei blockiertem bzw. kurzgeschlossenem Motor kurze, sehr hohe Stromimpulse besonders beim minimalen Tastverhältnis. Diese Stromimpulse (Größenordnung 100A) führen zu einer erhöhten Beanspruchung der Leistungstransistoren, Freilaufdioden, des Motors und insbesondere der Elektrolyt-Pufferkondensatoren. Folgen sind schnelle Alterung und somit reduzierte Lebensdauer und Zuverlässligkeit. Daher ist eine Überdimensionierung der Bauteile erforderlich.

Bei der kombinierten linearen und getakteten Ansteuerung derart, daß bis zu einer Grenzspannung U_{Motgrenz} die Leistungsbegrenzung mittels der linearen Leistungsbegrenzungsschaltung LLB bei Überschreiten der Leistungsbegrenzungskennlinie LLBK zum Einsatz kommt und oberhalb der Grenzspannung U_{Motgrenz} die getaktete Leistungsbegrenzungsschaltung GLB beim Überschreiten der Leistungsbegrenzungskennlinie GLBK für den getakteten Betrieb, werden jeweils die Vorteile beider Ansteuerungsarten miteinander kombiniert und deren Nachteile ausgeschlossen. In den Figuren 3 bis 5 sind die bereits erwähnten Kennlinien in Diagrammen dargestellt, deren Abszisse von der Motorspannung Uₘₒₜₒᵣ und deren Ordinate von dem Drain-Strom I_{drain} gebildet sind.

In Fig. 3 ist zwischen dem Arbeitsbereich AB für den normalen, ungefährdeten Betrieb und dem Überlastbereich ÜB die lineare Leistungsbegrenzungskennlinie LLBK eingetragen, die an einem Punkt 1 die Ordinate schneidet. An einem Punkt 2 schneidet die (gestrichelt eingezeichnete) Überlast-Endstufenkennlinie EKÜ die lineare Leistungsbegrenzungskennlinie LLBK. Bei Überschreiten des Punktes 2 wird daher auf die lineare Ansteuerung umgeschaltet, wodurch die Leistung auf die lineare Leistungsbegrenzungsschaltung LLBK beschränkt wird. Beim Motorhochlauf MH wird die Motorspannung Uₘₒₜₒᵣ allmählich bis zum Erreichen der linearen Leistungsbegrenzungskennlinie LLBK gesteigert, so daß ein sanfter Anlauf gewährleistet ist, der auf die lineare Leistungsbegrenzungskennlinie LLBK begrenzt ist, bis der Normalbetrieb in dem Arbeitsbereich AB erreicht ist.

Bei blockiertem Motor ergibt sich in Abhängigkeit vom Ohmschen Innenwiderstand des Motors eine geringe Drainspannung. Bei kurzgeschlossenem Motor wird die Motorspannung Uₘₒₜₒᵣ im Idealfall auf 0V beschränkt, wobei sich ein minimaler Strom bzw. eine minimale Kurzschluß-Verlustleistung (Punkt 1) einstellt. In beiden Fällen ist die Verlustleistung durch die lineare Leistungsbegrenzungskennlinie LLBK begrenzt.

Entsprechend ergibt sich die Arbeitsweise der getakteten Leistungsbegrenzungsschaltung GLB aus Fig. 4. Die Punkte 1 und 2 liegen hierbei auf der Leistungsbegrenzungskennlinie für den getakteten Betrieb ("getaktete Leistungsbegrenzungskennlinie"). Auch hierbei ist eine Überlast-Endstufenkennlinie EKÜ gestrichelt eingezeichnet, die sich wie bei Fig. 3 zum Beispiel durch den Staudruck bei einem Gebläsemotor ergeben kann. Schneidet die Überlast-Endstufenkennlinie EKÜ die getaktete Leistungsbegrenzungskennlinie GLBK, so reduziert die getaktete Ansteuerung das Tastverhältnis des Pulsweitengeneratorsignals und begrenzt die Verlustleistung auf den von der getakteten Leistungsbegrenzungskennlinie GLBK vorgegebenen Wert (Punkt 2). Bei der Normalbetrieb-Endstufenkennlinie EKL kommt die getaktete Leistungsbegrenzungsschaltung GLBK nicht zum Eingriff.

Bei einem blockierten Motor wird die Verlustleistung durch die getaktete Leistungsbegrenzungskennlinie GLBK entsprechend einem schwergängigen Motor begrenzt. Dabei ergibt sich abhängig vom Ohmschen Innenwiderstand des Motors eine geringe Drainspannung.

Bei kurzgeschlossenem Motor wird die Verlustleistung ebenfalls durch die getaktete Leistungsbegrenzungskennlinie GLBK begrenzt, wobei sich im Idealfall eine Motorspannung Uₘₒₜₒᵣ 0V und ein minimaler Strom bzw. eine minimale Kurzschluß-Verlustleistung einstellen (Punkt 1).

Beim Motorhochlauf MH ist der Motorstrom bei noch nicht laufendem Motor nur durch den Motorinnenwiderstand und/oder die Motor-Induktivität begrenzt. Deswegen läuft der Motor bei jedem Anlauf auf der getakteten Leistungsbegrenzungskennlinie GLBK hoch. Bis zum Normalbetrieb des Motors wird die Verlustleistung auf den durch die getaktete Leistungsbegrenzungskennlinie GLBK eingestellten Maximalwert begrenzt, so daß ein Sanftanlauf mit Stromspitzen erreicht wird.

Die Fig. 5 bezieht sich auf die kombinierte lineare und getaktete Ansteuerung. Auch hierbei legt der Arbeitsbereich AB den Bereich fest, in dem die Endstufenkennlinien EKÜ (Überlast) und EKN (Normalbetrieb) im regulären Betrieb liegen. Innerhalb des Arbeitsbereichs AB wird der Motor getaktet angesteuert.

Im Überlastbereich ÜB darf der Motor dauerhaft nicht betrieben werden. Die getaktete Leistungsbegrenzungskennlinie GLBK legt die an der Endstufenschaltung bzw. dem Motor vorhandene maximale Verlustleistung im getakteten Betrieb fest. Die lineare Leistungsbegrenzungskennlinie LLBK legt die an der Endstufe bzw. dem Motor vorhandene maximale Verlustleistung bei der linearen Ansteuerung fest. Im Punkt 1' erfolgt bei einer Grenzspannung U_{Motgrenz} der getakteten Leistungsbegrenzungskennlinie und der linearen Leistungsbegrenzungskennlinie der Übergang von der linearen Ansteuerung zu der getakteten Ansteuerung und umgekehrt.

Wird die getaktete Leistungsbegrenzungskennlinie oberhalb der Grenzspannung U_{Motgrenz} geschnitten, so wird durch Änderung des Tastverhältnisses die Verlustleistung auf die getaktete Leistungsbegrenzungskennlinie GLBK begrenzt. Ensprechend wird unterhalb der Grenzspannung U_{Motgrenz} bei Überschreitung der linearten Leistungsbegrenzungskennlinie LLBK die Verlustleistung durch die lineare Ansteuerung auf den Wert der linearen Leistungsbegrenzungskennlinie LLBK begrenzt.

Bei Unterschreiten der Grenzspannung U_{Motgrenz} an dem Punkt 1' wird die Schutzfunktion durch den linearen Ansteuerbetrieb der Endstufenschaltung übernommen. Der Motorhochlauf MH erfolgt zunächst wie bei der in Fig. 3 gezeigten Darstellung für den linearen Ansteuerbetrieb, geht jedoch bei Punkt 1' in den getakteten Betrieb über. Im Falle eines Motorkurzschlusses und/oder eines blockierten Motors wird die Verlustleistung linear auf die lineare Leistungsbegrenzungskennlinie begrenzt, da die Motorspannung Uₘₒₜₒᵣ = 0V ist bzw. infolge des geringen Ohm'schen Innenwiderstandes des Motors gering ist.

Die in den Fig. 3 bis 5 gezeigten Leistungsbegrenzungskennlinien können alternativ zum Beispiel auch horizontal verlaufen oder gekrümmt sein oder durch schaltungstechnisch erzeugte, aneinandergesetzte Kennlienienabschnitte gebildet sein, z.B. Kennlinienverlauf nach Fig. 6.

## Patentansprüche

1. Getaktete Endstufenschaltung zur Steuerung oder Regelung induktiver Lasten,
dadurch gekennzeichnet,
daß ein Schutzschaltungsabschnitt mit einer Leistungsbegrenzungsschaltung (LLB, GLB) vorgesehen ist, die die für die induktive Last gemäß einer Endstufenkennlinie (EKÜ) bereitgestellte Leistung auf einen Wert einer Leistungsbegrenzungskennlinie (LLBK, GLBK) zwischen einem Überlastbereich (ÜB) und einem Arbeitsbereich (AB) begrenzt.

2. Endstufenschaltung nach Anspruch 1,
dadurch gekennzeichnet,
daß die Leistungsbegrenzungsschaltung (LLB) für einen linearen Ansteuerbetrieb ausgelegt ist, wobei die Ansteuerung aus dem normalen getakteten Betrieb in den linearen Ansteuerbetrieb übergeht, wenn die Endstufenkennlinie (EKÜ) aus dem Arbeitsbereich (AB) kommend die Leistungsbegrenzungskennlinie (LLBK) schneidet.

3. Endstufenschaltung nach Anspruch 2,
dadurch gekennzeichnet,
daß zum Bereitstellen der Leistung für die induktive Last mindestens ein am Ausgang der Endstufenschaltung angeordneter Leistungstransistor (T) vorgesehen ist, der an seinem Steuereingang im Normalbetrieb von Schaltimpulsen eines Pulsweitengenerators (PWM) angesteuert ist, während er bei vorhandener Überlast in den linearen Ansteuerbetrieb gesteuert ist.

4. Endstufenschaltung nach Anspruch 3,
dadurch gekennzeichnet,
daß zum Durchführen des linearen Ansteuerbetriebs eine Linear-Leistungsbegrenzungsschaltung (LLB) zwischen der Ausgangsseite des Leistungstransistors (T) und dessen Steuereingang angeschlossen ist.

5. Endstufenschaltung nach Anspruch 4,
dadurch gekennzeichnet,
daß die Linear-Leistungsbegrenzungsschaltung (LLB) eine Verstärkerschaltung (U18') mit einem invertierenden und einem nichtinvertierenden Eingang (6,5) aufweist, von denen der eine auf eine Bezugsspannung und der andere auf eine von der induktiven Last abhängige Spannung und/oder Strom gelegt ist, und
daß der Ausgang der Verstärkerschaltung (U18') zur Steuerung des linearen Ansteuerbetriebs an einem Knotenpunkt zwischen dem Ausgang des Pulsweitengenerators (PWM) und dem Steuereingang des Leistungstransistors (T1) angeschlossen ist.

6. Endstufenschaltung nach Anspruch 1,
dadurch gekennzeichnet,
daß die Leistungsbegrenzungsschaltung (GLB) für einen getakteten Ansteuerbetrieb ausgelegt ist, wobei die Ansteuerung aus dem normalen getakteten Betrieb in den durch Überlast bedingten getakteten Ansteuerbetrieb übergeht, wenn die Endstufenkennlinie (EKÜ) aus dem Arbeitsbereich (AB) kommend die Leistungsbegrenzungskennlinie (GLBK) schneidet.

7. Endstufenschaltung nach Anspruch 6,
dadurch gekennzeichnet,
daß zum Bereitstellen der Leistung für die induktive Last mindestens ein am Ausgang der Endstufenschaltung angeordneter Leistungstransistor (T) vorgesehen ist, der an seinem Steuereingang im Normalbetrieb von Schaltimpulsen eines Pulsweitengenerators (PWM) angesteuert ist, während er bei vorhandener Überlast in den getakteten Ansteuerbetrieb gesteuert ist.

8. Endstufenschaltung nach Anspruch 7,
dadurch gekennzeichnet,
daß zum Durchführen des getakteten Ansteuerbetriebs eine getaktete Leistungsbegrenzungsschaltung (GLB) zwischen der Ausgangsseite des Leistungstransistors (T) und vor dem Eingang des Pulsweitengenerators (PWM) angeschlossen ist.

9. Endstufenschaltung nach Anspruch 8,
dadurch gekennzeichnet,
daß die getaktete Leistungsbegrenzungsschaltung (GLB) eine Verstärkerschaltung (U18'') mit einem invertierenden und einem nichtinvertierenden Eingang aufweist, von denen der eine auf eine Bezugsspannung und der andere auf eine von der induktiven Last abhängige Spannung und/oder Strom gelegt ist, und
daß der Ausgang der Verstärkerschaltung (U18') zur Steuerung des getakteten Ansteuerbetriebs an einem Knotenpunkt vor dem Eingang des Pulsweitengenerators (PWM) angeschlossen ist.

10. Endstufenschaltung nach einem der vorhergehenden Ansprüche,
dadurch gekennzeichnet,
daß sowohl eine Leistungsbegrenzungsschaltung (LLB) für einen linearen Ansteuerbetrieb als auch eine Leistungsbegrenzungsschaltung (GLB) für einen getakteten Ansteuerbetrieb vorgesehen ist und
daß die beiden Leistungsbegrenzungsschaltungen (LLB, GLB) so ausgelegt sind, daß die Leistungsbegrenzungsschaltung (LLB) für den linearen Ansteuerbetrieb in einem unteren Spannungsbereich der Leistungsbegrenzungskennlinie bis zu einer Grenzspannung (U_{Motgrenz}) wirksam ist und
daß die Leistungsbegrenzungsschaltung (GLB) für den getakteten Ansteuerbetrieb in dem Spannungsbereich oberhalb der Grenzspannung (U_{Motgrenz}) wirksam ist.

11. Endstufenschaltung nach einem der Ansprüche 5, 9 oder 10,
dadurch gekennzeichnet,
daß die mindestens eine Leistungsbegrenzungsschaltung (LLB, GLB) mit ihrem invertierenden Eingang (6) an eine Additionsstufe (R7, R8 bzw. R11, R12) oder Multiplikationsstufe angeschlossen ist, mit der die von der induktiven Last abhängige Spannung und/oder Strom abgegriffen ist.

12. Endstufenschaltung nach einem der Ansprüche 5 oder 9 bis 11,
dadurch gekennzeichnet,
daß der Ausgang (7) der Verstärkerschaltung (U18', U18'') an die Kathode einer Diode (D2 bzw. D3) angeschlossen ist, deren Anode an dem Knotenpunkt zwischen dem Ausgang des Pulsweitengenerators (PWM) und dem Steuereingang des Leistungstransistors (T) bzw. vor dem Eingang des Pulsweitengenerators (PWM) liegt.
